Europäisches Patentamt

European Patent Office

Office européen des brevets

(19)

(11) Numéro de publication : **0 055 660 B1**

(12) # FASCICULE DE BREVET EUROPÉEN

(45) Date de publication du fascicule du brevet :
03.04.85

(51) Int. Cl.⁴ : **B 64 C 27/35, F 16 F 1/40**

(21) Numéro de dépôt : **81402033.5**

(22) Date de dépôt : **21.12.81**

(54) **Butée lamifiée de forme courbe, notamment pour rotor d'hélicoptère.**

(30) Priorité : **26.12.80 FR 8027593**

(43) Date de publication de la demande :
**07.07.82 Bulletin 82/27**

(45) Mention de la délivrance du brevet :
**03.04.85 Bulletin 85/14**

(84) Etats contractants désignés :
**DE GB IT**

(56) Documents cités :
**DE-A- 1 901 774**
**FR-A- 2 139 176**
**FR-A- 2 399 945**
**US-A- 3 179 400**

(73) Titulaire : **SOCIETE NATIONALE INDUSTRIELLE
AEROSPATIALE
37 boulevard de Montmorency
F-75016 Paris Cedex 16 (FR)**

(72) Inventeur : **Coffy, René Louis
13 rue des lauriers
F-13960 Sausset-Les-Pins (FR)**
Inventeur : **Azeau, Jean Jacques Emile
Vallon Rambert
F-13120 Gardanne (FR)**

(74) Mandataire : **Lepeudry-Gautherat, Thérèse et al
CABINET ARMENGAUD JEUNE CASANOVA et
LEPEUDRY 23 boulevard de Strasbourg
F-75010 Paris (FR)**

Jouve, 18, rue St-Denis, 75001 Paris, France

## Description

La présente invention concerne les butées lamifiées constituées par un empilement de couches alternées de matière souple, par exemple élastomère, et d'un matériau résistant et rigide.

On sait que l'aptitude d'un organe comportant une certaine épaisseur de matière souple et élastique à supporter une charge de compression peut être multipliée par un facteur élevé par incorporation de couches parallèles distantes d'un matériau non extensible. Simultanément, l'élasticité dans cette direction perpendiculaire est réduite de façon correspondante. Pour une épaisseur de matière souple et élastique donnée, l'élasticité sous l'action des forces de compression diminue progressivement lorsque le nombre de couches augmente. Simultanément, la charge de compression qui peut être supportée dans cette direction augmente en proportion. L'aptitude de la matière souple à se déformer en rotation, le long des couches, n'est pratiquement pas affectée cependant par la présence des couches intermédiaires de matériau inélastique.

On sait donc réaliser des butées qui présentent une forte rigidité à l'écrasement en direction perpendiculaire aux couches mais admettant des déformations importantes dans le plan des couches, sans que les propriétés élastiques et/ou viscoélastiques de la matière souple soient modifiées.

On utilise couramment de telles butées lamifiées dans les diverses articulations des rotors d'hélicoptères, étant donné leurs excellentes propriétés. Cependant, on constate que ces butées présentent une certaine fatigue lorsqu'elles subissent des mouvements alternés axiaux et angulaires combinés. La tenue à la fatigue d'une telle butée dépend essentiellement des contraintes de compression et des sollicitations dynamiques et statiques combinées auxquelles elle est soumise.

Le brevet redélivré des Etats-Unis d'Amérique n° 30 262 décrit une butée lamifiée de forme courbe dont la tenue à la fatigue est excellente. Le perfectionnement décrit dans ce brevet repose sur la constatation du fait que la fatigue préférentielle se manifeste dans la couche interne de manière souple qui a le plus petit rayon. Selon ce brevet, la fatigue de cette couche interne est réduite par une meilleure répartition des efforts. Selon ce brevet, les couches de matière souple sont sous forme de calottes sphériques dont les épaisseurs croissent progressivement vers l'extérieur. Ce perfectionnement se révèle effectivement efficace et il est avantageux que les butées lamifiées selon l'invention le comportent aussi.

On a aussi constaté que non seulement les efforts n'étaient pas régulièrement répartis de l'intérieur vers l'extérieur mais aussi que, dans une même couche de matière souple, ils n'étaient pas les mêmes au centre et vers les bords. Si on analyse la répartition des contraintes de compression dues à un effort d'écrasement et l'amplitude de la déformation de la matière souple due à une rotation de la butée, on constate que les contraintes de compression sont maximales au centre de la butée et minimales à sa périphérie alors que, à l'inverse, l'amplitude de la déformation est maximale à la périphérie de la butée et minimale au centre.

L'invention concerne plus précisément une amélioration de la tenue à la fatigue de telles butées lorsqu'elles sont soumises à des sollications dynamiques dont les déformations comportent une rotation.

L'augmentation de la durée de vie est obtenue par disposition d'une plus grande épaisseur de matière souple dans les zones où l'amplitude de la déformation est la plus importante, ces zones étant les plus éloignées de l'axe de rotation. Inversement, dans les zones où l'amplitude de la déformation est plus faible, les épaisseurs de matière souple sont plus faibles afin que la résistance et la rigidité à l'écrasement soient améliorées.

Le brevet des Etats-Unis d'Amérique n° 3 179 400 décrit un ressort de torsion formé par empilement, entre deux armatures tronconiques, de couches alternées de matière souple et de matériau résistant et inélastique. Selon ce brevet, les armatures interne et externe sont parallèles et la variation d'épaisseur des couches de matière souple, croissant de l'intérieur vers l'extérieur, est obtenue par variation d'épaisseur des couches de matériau rigide, décroissant de l'intérieur à l'extérieur. Cette réalisation présente des inconvénients car elle nécessite la réalisation, pour la formation des couches de matériau résistant et rigide, d'éléments ayant une épaisseur qui varie. Il n'est donc pas possible de réaliser des organes par simple emboutissage de tôles.

L'invention remédie aux inconvénients du dispositif décrit dans ce brevet par utilisation de couches correspondant sensiblement à des calottes sphériques dont les centres de courbure sont décalés suivant un axe de symétrie de la butée lamifiée.

Par rapport au US-E-30 262 qui décrit déjà une butée lamifiée de forme courbe et symétrique autour d'un axe, du type qui comprend une armature interne présentant une surface convexe et une armature externe présentant une surface concave, des couches courbes et alternées de matière souple et de matériau résistant et rigide étant disposées entre les deux armatures, l'invention est caractérisée en ce que dans chaque plan axial, les rayons de courbure moyens des couches successives de matière souple, dans le sens allant de l'armature interne vers l'armature externe, augmentent plus vite, d'une couche de matière souple à une couche successive de matière souple, que la somme des épaisseurs, mesurée à partir de l'armature interne, des différentes couches de matière souple et de matière résistant et rigide qui sont comprises entre l'armature interne et ladite couche successive, si bien que chaque couche a une épaisseur croissant à partir de l'axe. L'épaisseur augmente donc de la région voisine de l'axe vers les bords.

Il est avantageux que la butée lamifiée de forme courbe soit du type dans lequel les épaisseurs des couches successives de matière souple sont de plus en plus grandes dans le sens de l'armature intérieure vers l'armature extérieure.

Il est avantageux que les surfaces convexe et concave des armatures soient des portions de surfaces sphériques et soient disposées autour d'un même axe de symétrie, les couches alternées successives étant limitées elles aussi par des portions de surfaces sphériques, les centres de ces portions de surfaces sphériques étant disposés de plus en plus du côté de l'armature interne lorsque les couches sont disposées de plus en plus du côté de l'armature externe.

Il est avantageux que les couches de matériau rigide aient une épaisseur constante et que seules les couches de matériau souple aient une épaisseur variable. De cette manière, les couches de matériau rigide peuvent être formées par simple emboutissage d'une tôle.

En outre, il est avantageux que le matériau résistant, rigide et inextensible des couches soit un métal ou une matière plastique armée, et que la matière souple soit un élastomère.

D'autres caractéristiques et avantages de l'invention ressortiront mieux de la description qui va suivre, faite en référence aux dessins annexés sur lesquels :

la figure 1 est une coupe axiale d'une butée lamifiée de forme courbe de type connu ; et

la figure 2 est une coupe axiale d'une butée lamifiée de type courbe selon l'invention.

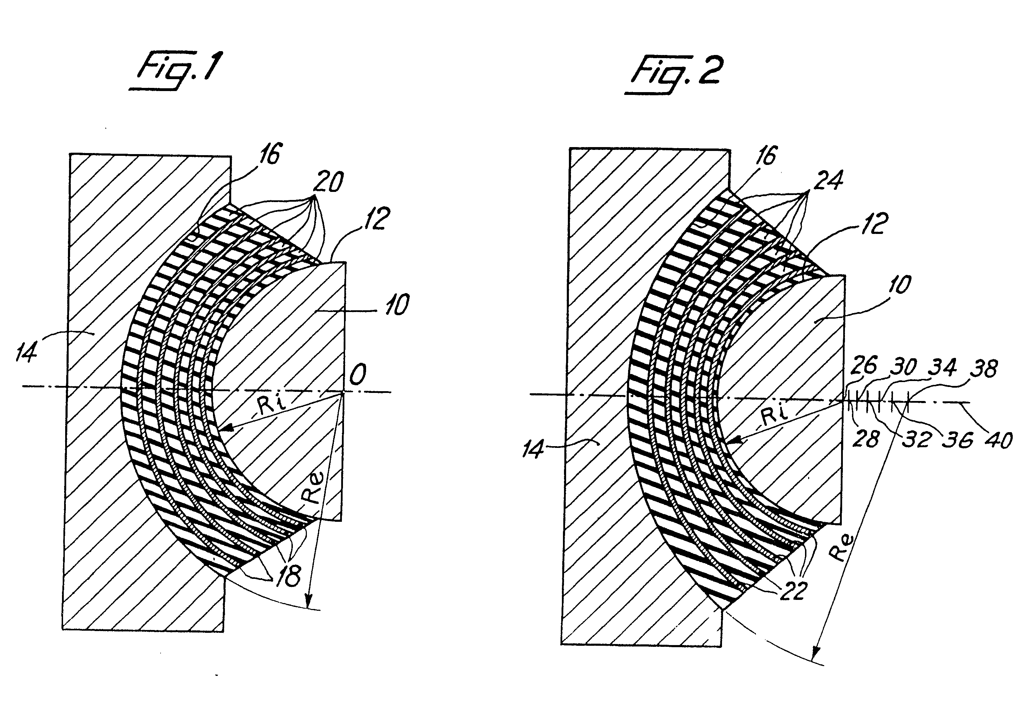

La figure 1 représente une butée lamifiée de type courbe connue, comprenant une armature interne 10 ayant une surface hémisphérique 12 de rayon Ri. Une armature externe 14 a une surface concave 16 de rayon Re. Entre les deux armatures, des couches alternées 18 de matériau résistant et rigide et 20 de matière souple sont empilées. Les couches de matériau résistant et rigide 18 sont avantageusement formées par des coupelles embouties d'épaisseur relativement faible et sensiblement constante. Il s'agit par exemple de coupelles d'acier. Il peut cependant aussi s'agir d'une matière plastique armée de fibres de verre par exemple. Les couches 20 de matière souple sont avantageusement formées d'un élastomère et on note que l'épaisseur de ces couches augmente progressivement de l'armature interne 10 à l'armature externe 14. Cette butée a donc le perfectionnement décrit précédemment en référence au brevet redélivré des Etats-Unis d'Amérique n° 30 262.

La figure 2 représente une butée lamifiée analogue à celle de la figure 1 mais comprenant le perfectionnement selon l'invention. Sur la figure 2, l'armature interne 10 ayant une surface convexe 12 et l'armature externe 14 ayant une surface concave 16 sont semblables aux éléments correspondants de la butée de la figure 1.

Par contre, les couches alternées sont différentes. En effet, elles comportent des couches 22 d'un matériau résistant et rigide et des couches 24 d'une matière souple.

Les couches 22 de matériau résistant et rigide sont encore formées par des coupelles embouties, avantageusement d'acier, ayant une épaisseur sensiblement constante. Cependant, alors que, dans la butée de la figure 1, les centres de courbure de toutes les coupelles 18 sont confondus en un même point O, les centres de courbure des différentes coupelles 22 du mode de réalisation de la figure 2 sont décalés.

Plus précisément, sur la figure 2, le point 26 représente le centre de courbure de la surface convexe de l'armature interne 10. Le point 38 représente le centre de courbure de la surface concave de l'armature externe 14. Entre ces deux points, les centres de courbure 28, 30, 32, 34 et 36 des différentes coupelles 22 sont échelonnés si bien que les espaces séparant deux coupelles ou une coupelle et la surface d'une armature adjacente n'ont pas une épaisseur constante. Comme les centres de courbure s'écartent progressivement de plus en plus du côté de l'armature interne lorsque les coupelles sont placées de plus en plus du côté de l'armature externe, les espaces délimités ont donc une épaisseur minimale au voisinage de l'axe 40 de symétrie de la butée et une épaisseur maximale vers les bords. Ainsi, selon l'invention, l'épaisseur de la matière souple est minimale à l'endroit où les contraintes de compression sont maximales et est maximale à l'endroit où les déformations ont une amplitude maximale.

On soumet les deux butées lamifiées représentées sur les figures 1 et 2 à des essais simulant une utilisation dans un rotor d'hélicoptère, c'est-à-dire des essais au cours desquels les armatures présentent des mouvements mutuels alternés axiaux et angulaires combinés. On constate que la tenue en fatigue de la butée selon l'invention est pratiquement égale au double de celle de la butée lamifiée de type connu.

L'armature interne et l'armature externe peuvent être en toute matière ayant une résistance mécanique convenable, et elles sont en général formées d'un métal. Les couches de matériau résistant et rigide sont formées d'une matière inextensible qui est le plus souvent un métal. La matière souple peut être avantageusement un élastomère. Il convient évidemment que l'élastomère adhère partout moyen connu sur le matériau résistant et rigide des coupelles intermédiaires et des armatures.

Bien qu'on ait indiqué que les couches de matière souple étaient formées d'un élastomère, la matière des différentes couches peut évidemment ne pas être la même.

La fabrication des butées lamifiées de forme courbe selon l'invention ne pose pas de problèmes techniques particuliers. En effet, la fabrication des butées de type classique met en œuvre des peignes qui supportent les coupelles et les maintiennent en position lorsque l'élastomère est injecté entre les coupelles. Lors de la fabrication des butées selon l'invention, seule la position relative des coupelles est modifiée, ce qui peut être réalisé par une adaptation mineure de l'appareillage de fabrication.

## Revendications

1. Butée lamifiée de forme courbe et symétrique autour d'un axe (40), du type qui comprend :
une armature interne (10) présentant une surface convexe,
une armature externe (14) présentant une surface concave, et
des couches courbes et alternées (22, 24) de matière souple et de matériau résistant et rigide, ladite butée étant caractérisée en ce que, dans chaque plan axial, les rayons de courbure moyens des couches successives (24) de matière souple, dans le sens allant de l'armature interne (10) vers l'armature externe (14), augmentent plus vite, d'une couche (24) de matière souple à une couche (24) successive de matière souple, que la somme des épaisseurs, mesurée à partir de l'armature interne (10), des différentes couches de matière souple (24) et de matériau résistant et rigide (22) qui sont comprises entre l'armature interne (10) et ladite couche (24) successive, si bien que chaque couche (24) a une épaisseur croissante à partir de l'axe (40).

2. Butée selon la revendication 1, caractérisée en ce que les épaisseurs des couches successives (24) de matière souple sont de plus en plus grandes dans le sens allant de l'armature interne (10) à l'armature externe (14).

3. Butée selon l'une des revendications 1 et 2, caractérisée en ce que la surface convexe (12) et la surface concave (16) des armatures sont des portions de surfaces sphériques et sont disposées autour du même axe (40) de symétrie, et les couches alternées successives (22, 24) sont limitées par des portions de surfaces sphériques et sont disposées autour du même axe (40) de symétrie.

4. Butée selon l'une quelconque des revendications 1 à 3, caractérisée en ce que les couches (22) de matière rigide ont une épaisseur constante, et seules les couches (24) de matière souple ont une épaisseur variable.

5. Butée selon l'une quelconque des revendications 1 à 4, caractérisée en ce que le matériau rigide des couches est un matériau inextensible choisi dans le groupe qui comprend les métaux et les matières plastiques armées.

6. Butée selon l'une quelconque des revendications 1 à 5, caractérisée en ce que la matière souple est un élastomère.

## Claims

1. Curve-shaped laminated bearing, symmetrical about an axis 40, of the type comprising :
an internal frame 10 with a convex surface,
an external frame 14 with a concave surface, and
alternating curved layers 22, 24 of supple material and strong and rigid material, said bearing being characterized in that, in each axial plane, the mean radii of curvature of the successive layers 24 of supple material, starting from the internal frame 10 towards the external frame 14, increase at a faster rate, from one layer 24 of supple material to a successive layer 24 of supple material, than the sum of the thicknesses, measured from the internal frame 10, of the different layers of supple material 24 and of strong and rigid material 22 included between the internal frame 10 and said successive layer 24, so that each layer 24 increases in thickness from the axis 40.

2. Bearing according to Claim 1, characterized in that the thicknesses of the successive layers 24 of supple material are gradually greater from the internal frame 10 to the external frame 14.

3. Bearing according to one of Claims 1 and 2, characterized in that the convex surface 12 and the concave surface 16 of the frames are spherical surface portions and are disposed about the same axis 40 of symmetry, and the successive alternate layers 22, 24 are limited by spherical surface portions and are disposed about the same axis 40 of symmetry.

4. Bearing according to any one of Claims 1 to 3, characterized in that the layers 22 of rigid material have a constant thickness, and only the layers 24 of supple material have a variable thickness.

5. Bearing according to any one of Claims 1 to 4, characterized in that the rigid material of the layers is an inextensible material selected from the group which includes metals and reinforced plastics materials.

6. Bearing according to any one of Claims 1 to 5, characterized in that the supple material is an elastomer.

## Ansprüche

1. Kurvenförmiges Schichtlager und symmetrisch um eine Achse (40), welches aus
einem inneren Rotor (10), der eine konvexe Oberfläche darstellt,
einem äußeren Rotor (14), der eine konkave Oberfläche darstellt, und
abwechselnden kurvenförmigen Schichten (22, 24) aus elastischem Material sowie aus resistenten und starren Materialien besteht,
wobei das Lager dadurch gekennzeichnet ist, daß in jeder Axialebene die mittleren Kurvenstrahlen der sich abwechselnden Schichten (24) aus elastischem Material in der Richtung vom inneren Rotor (10) zum äußeren Rotor (14) schneller von einer Schicht (24) aus weichem Material zu einer folgenden Schicht (24) aus weichem Material zunehmen als die Summe der Dicken, gemessen ab dem inneren Rotor (10) der verschiedenen Schichten aus weichem Material (24) sowie aus resistenten und starren Materialien (22), die sich zwischen dem inneren Rotor (10) und der genannten folgenden Schicht (24) befinden, so daß jede Schicht (24) ab der Achse (40) eine zunehmende Dicke aufweist.

2. Lager nach Anspruch 1, dadurch gekennzeichnet, daß die Dicken der aufeinanderfolgenden Schichten (24) aus elastischem Material vom inneren Rotor (10) zum äußeren Rotor (14) größer werden.

3. Lager nach einem der Ansprüche 1 und 2, dadurch gekennzeichnet, daß die konvexe Oberfläche (12) und die konkave Oberfläche (16) der Rotoren Teile von sphärischen Oberflächen sind und um die gleiche Symmetrieachse (40) angeordnet sind, und daß die abwechselnd aufeinanderfolgenden Schichten (22, 24) durch Teile der sphärischen Oberflächen begrenzt sind und um die gleiche Symmetrieachse (40) angeordnet sind.

4. Lager nach einem oder mehreren der Ansprüche 1 bis 3, dadurch gekennzeichnet, daß die Schichten (22) aus starrem Material eine konstante Dicke haben, und nur die Schichten (24) aus elastischem Material eine veränderliche Dicke haben.

5. Lager nach einem oder mehreren der Ansprüche 1 bis 4, dadurch gekennzeichnet, daß das starre Material der Schichten ein unausdehnbares Material ist, ausgewählt aus der Gruppe umfassend Metalle und verstärkte Plastikmaterialien.

6. Lager nach einem oder mehreren der Ansprüche 1 bis 5, dadurch gekennzeichnet, daß das elastische Material ein Elastomer ist.

_Fig.1_

_Fig.2_

0 055 660